# EUROPÄISCHE PATENTSCHRIFT

(11) **EP 0 354 869 B1**
(45) Veröffentlichungstag und Bekanntmachung des Hinweises auf die Patenterteilung: **08.09.1993**
(21) Anmeldenummer: 89810508.5
(22) Anmeldetag: 04.07.1989
(51) Int. Cl.: F16D 1/06, F04D 29/20

(54) **Vorrichtung zum axialen Fixieren eines Maschinenteils auf einer Welle oder Achse und Verwendung der Vorrichtung**
Device for axially attaching a machine part to a shaft or axle, and use of the device
Dispositif de fixation axiale d'un élément sur un arbre ou axe, et utilisation du dispositif

(30) Priorität: 08.08.1988 CH 2999/88
(43) Veröffentlichungstag der Anmeldung: 14.02.1990
(73) Patentinhaber: SULZER PUMPEN AG, CH-8401 Winterthur (CH)
(72) Erfinder: Medgyesy, Stephen, CH-8450 Andelfingen (CH)
(74) Vertreter: Hammer, Bruno, Dr.

(56) Entgegenhaltungen:
- DE-B- 1 055 962
- DE-B- 1 118 012
- DE-C- 499 929
- DE-C- 973 550
- FR-A- 327 737
- GB-A- 770 683
- GB-A- 1 205 199
- US-A- 2 836 041
- US-A- 3 631 688
- US-A- 4 136 989

## Beschreibung

Die Erfindung bezieht sich auf eine Vorrichtung zum axialen Fixieren von einem oder mehreren Maschinenbauteilen auf einer Welle oder Achse, sowie auf die Verwendung derartiger Vorrichtungen.

Derartige Vorrichtungen werden im Maschinenbau beispielsweise zum Fixieren von Teilen wie Laufrädern von Turbomaschinen, wie Pumpenlaufrädern auf der Welle, von Zahnrädern auf Wellen und dergleichen verwendet und das drehfeste Verbinden dieser Maschinenteile mit der Achse bzw. Welle erfolgt oft mit Nut-Federteilen oder Keilen, die in Nuten, z.B. Axial-Nuten von Welle und Maschinenteil, eingreifen.

Bisher erfolgt das Festhalten des Maschinenteils in axialer Richtung beispielsweise mit Hülsen, die ein Innengewinde aufweisen und die mit einem Gewinde auf dem Mantel der Welle oder Achse verschraubt sind und so axial positionierbar sind. Dabei können beispielsweise auf beiden Seiten eines Laufrades derartige Hülsen vorhanden sein, oder nur auf einer und auf der anderen beispielsweise ein der Welle oder Achse angearbeitet Anschlag.

Die deutsche Patentschrift DE-C-973.550 beschreibt das Befestigen eines Pumpenlaufrades mit einer einzigen Hülse auf einer Welle, wobei die Hülse und das Pumpenlaufrad miteinander verschraubt sind. Hülse und Laufrad stützen sich in entgegengesetzter Richtung, axial auf einen in einer Nute der Welle positionierten Stützring.

In den britischen Patenten GB-A-Nr. 1.205.199 und GB-A-770.683 sind z.B. solche Vorrichtungen zum Fixieren von Maschinenteilen auf Wellen beschrieben, bei denen die Welle jeweils ein Aussengewinde aufweist, mit dem eine Hülse verschraubt ist.

Das Anbringen eines Aussengewindes führt u.a. aufgrund der engen Kerbradien, die bei Gewinden insbesondere im Gewindegrund vorhanden sind, zu einer unerwünschten Schwächung und zu einer erhöhten Neigung zu Riss- und Korrosionsbildung der Welle. Bei Maschinenteilen, die in aggressiver Umgebung eingesetzt werden, wie dies beispielsweise häufig bei Pumpen der Fall ist, wirken sich diese Nachteile besonders stark aus.

Aufgabe der Erfindung ist es, eine Vorrichtung zu schaffen, welche das axiale Fixieren von Maschinenteilen auf Wellen und Achsen ohne merkliches Schwächen der Welle oder Achse, und ohne dass deren Korrosionsanfälligkeit erhöht wird, ermöglicht. Eine derartige Vorrichtung ist erfindungsgemäss durch die Merkmale im Kennzeichen von Anspruch 1 gekennzeichnet. Anspruch 5 bezieht sich auf eine besonders vorteilhafte Verwendung derartiger Vorrichtungen. Die abhängigen Ansprüche beziehen sich auf besonders vorteilhafte Ausführungen und Anwendungen derartiger Vorrichtungen.

Bei der Vorrichtung nach der Erfindung weist die Welle oder Achse selbst keine Elemente mit engen und kleinen Kerbradien auf, wie dies beispielsweise bei Gewinden der Fall ist. Die Nute für den Spannring, der als axialer Anschlag dient, kann beispielsweise einen im Vergleich zu Gewinden grossen Radius von etwa 6 mm aufweisen. Der Spannring ist mit Vorteil aus Titan gearbeitet. Dieser Werkstoff hat neben der vorzüglichen mechanischen Festigkeit von 10³ N/mm² - wesentlich besser als Stahl - den Vorteil, korrosionsfest zu sein. Darüberhinaus ist das Anarbeiten von Gewinden auf eine Welle eine kostenaufwendige Operation. Befestigungsvorrichtungen nach der Erfindung benötigen auch keine Abstufungen der Welle oder Achse. In jedem Fall wird der Wellen- oder Achsdurchmesser nicht vermindert, was zu einer erhöhten Steifigkeit, insbesondere auch einer erhöhten Biegefestigkeit der Welle oder Achse, führt.

Wenn das Gewinde (z.B. M 130x4-Gewinde) zwischen den beiden Hülsen, z.B. nach längerem Betrieb anfrisst bzw. festsitzt, kann z.B. ein Pumpenlaufrad ohne Beschädigen der Welle selbst demontiert werden. Darüberhinaus erlaubt die Konstruktion mit Hülse und Spannhülse nach der Erfindung, das Anzugsmoment bei der Montage exakt festzulegen, ohne dass ein späteres Nachziehen oder Nachstellen überhaupt noch nötig ist. Zum Fixieren des Gewindes kann beispielsweise eine radiale Sicherungsschraube vorgesehen sein.

Um das Gewinde gegen Korrosion zu schützen, können in und an den Hülsen Dichtungen vorgesehen sein, die das Vordringen des korrosiven Mediums bis z.B. zum Gewinde und in den Schiebesitz (z.B. Bearbeitungs-Toleranz H7 der Bohrung im Pumpenrad; Bearbeitungs-Toleranz G6 der Welle) zwischen Pumpenrad und Welle verhindern.

Die Erfindung wird anhand von Ausführungsbeispielen erfindungsgemässer Vorrichtungen näher erläutert. Es zeigen:
- Fig. 1: in einem schematischen Seitenschnitt durch Teile einer Vorrichtung zum axialen Fixieren von einem Pumpenlaufrad auf der Welle;
- Fig. 2: den schematischen Seitenschnitt durch Teile einer erfindungsgemässen Vorrichtung mit Dichtungselementen.

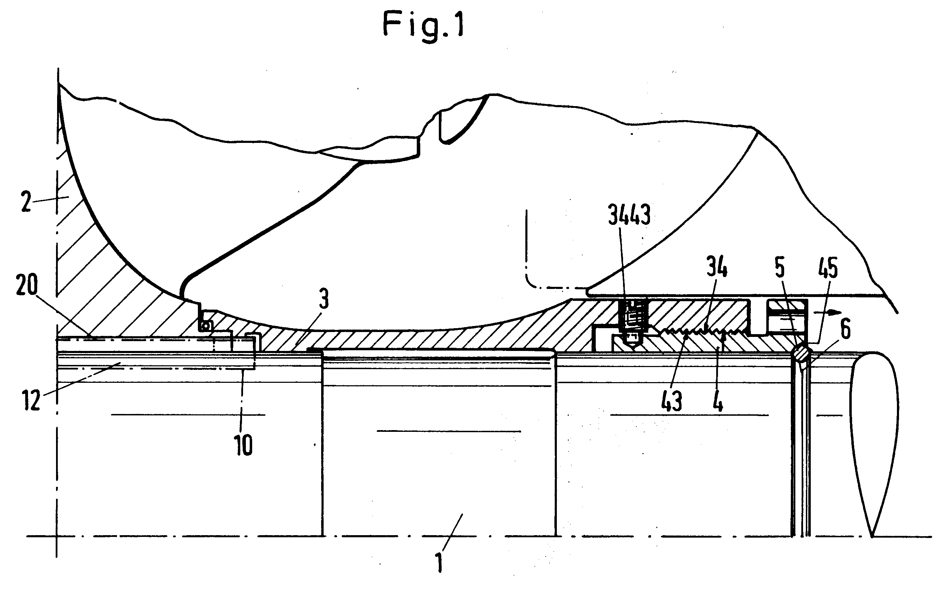

Beim Pumpenlaufrad von Fig. 1 sind auf der Welle 1 das eigentliche Laufrad oder Schaufelrad 2 mit einer erfindungsgemässen Vorrichtung, die im wesentlichen von der Hülse 3, der Spannhülse 4 und dem Spannring 5 in der Nut 6 gebildet wird, axial fixiert. Die drehfeste Koppelung zwischen Welle 1 und Schaufelrad 2 erfolgt mit dem Keil 12, der in den Axialnuten 10 und 20 von Welle 1 und Schaufelrad 2 eingepasst ist. Die Hülse 3 und die Spannhülse 4 sind an den nach innen bzw. nach aussen gerichteten Gewinden 34 und 43 miteinander verschraubt.

Bei der Montage wird vorerst das Gewinde soweit eingedreht, dass der Spann- bzw. Haltering 5 in die Nut 6 eingefügt werden kann. Dann werden die Gewinde 34, 43 wieder auseinandergedreht, so dass die Spannhülse 4 vom Schaufelrad 2 weg (Pfeil) zum Spannring 5 gebracht wird. Dies geschieht soweit, dass die Sicherungsnut 45 der Spannhülse 4 den Spannring 5 in der Nut 6 festhält. Der Sicherungsring 5 kann beispielsweise aus Titan gefertigt sein. Hülse 3 und Spannhülse 4, die zweite Hülse, sind z.B. mit der Sicherungsschraube 3443 gegeneinander drehgesichert. Die Sicherungsschraube 3443 kann ihrerseits drehgesichert sein, z.B. mit einem Sicherungslack, wie Loctite^{R}.

Auf der anderen, hier nicht gezeigten Seite des Schaufelrades 3 kann eine gleiche Positioniervorrichtung angebracht sein. Es ist aber auch denkbar, auf dieser anderen Seite lediglich einen zweiten Spannring in einer zweiten Nut anzubringen, wobei z.B. am Schaufelrad 2 eine diesen zweiten Spannring sichernde Sicherungsnut vorgesehen sein könnte. Es ist aber möglich, auf der Gegenseite zur gezeichneten Vorrichtung, irgendeinen anderen axialen Anschlag bzw. eine andere Anschlagsvorrichtung vorzusehen.

Die axiale Position des Schaufelrades 2 wird durch die Lage des Spannringes 5 und der Nut 6 und die Verschraubung der Gewinde 34, 43 und natürlich die Lage des Anschlags auf der Gegenseite des Schaufelrades 2 bestimmt.

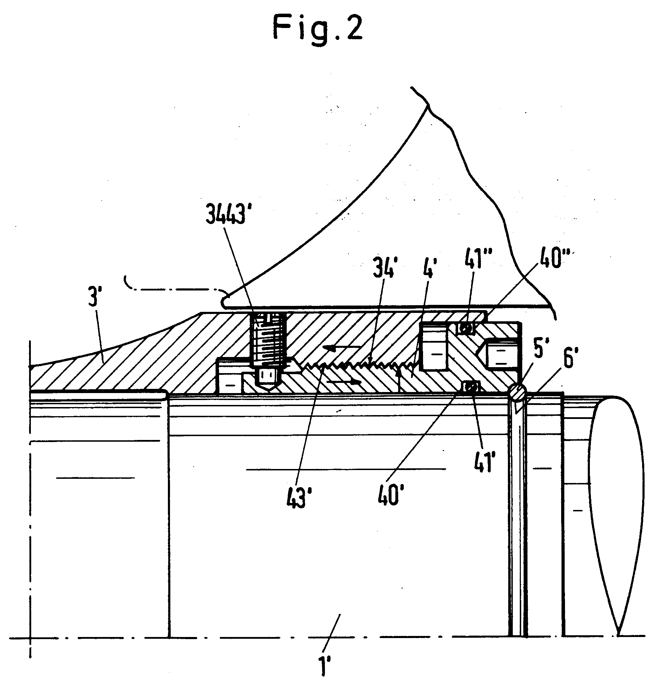

Fig. 2 zeigt die Hülse 3' mit dem Gewinde 34' und die als Spannhülse ausgebildete zweite Hülse 4' mit dem Gewinde 43'. Diese beiden Hülsen 3' und 4' sind mit den Gewinden 34' bzw. 43' miteinander verschraubt und mit der Sicherungsschraube 3443' drehgesichert. Der Spannring 5' liegt in der Nut 6' und dient für die Spannhülse 4' als axialer Anschlag. Die Montage, beispielsweise eines hier nicht gezeichneten Schaufelrades auf der Welle 1', kann in der gleichen Weise wie für Fig. 1 beschrieben erfolgen.

Zusätzlich sind hier in den Nuten 40' und 40'' der Spannhülse 4' Dichtungselemente, wie z.B. O-Ringe 41', 41'', angebracht, welche das Eindringen von beispielsweise Fördermedium einer Pumpe, zu den Gewinden 34', 43', durch den Spalt zwischen Welle 1' und Hülse 4', bzw. den Hülsen 3' und 4', verhindern. Das Eindringen von Fördermedium durch das Gewinde der Sicherungsschraube 3443' kann z.B. mit Loctite^{R} verhindert werden. Das Dichten kann selbstverständlich mit anderen Dichtmitteln und/oder an anderer Stelle angebrachten Dichtmittel erreicht werden.

Wenn auf der, axial betrachtet, Gegenseite des nicht gezeichneten Schaufelrades oder der Hülse 3' ebenfalls Dichtungen angebracht sind, kann auch ein Eindringen von Fördermedium durch den Spalt zwischen Hülse 3' und Welle 1', bzw. Schaufelrad und Welle 1' verhindert werden. Damit können die verschraubten Cowinde 34' und 43' weitgehend gegen Korrosion und Festsitzen geschützt werden.

Obschon die Erfindung anhand der Montage und axialen Positionierung von Schaufelrädern, insbesondere von Pumpenlaufrädern auf Wellen, erklärt und erläutert wurde, ist die Vorrichtung nach der Erfindung zum Fixieren anderer Maschinenteile auf Wellen und Achsen geeignet und vorteilhaft.

## Patentansprüche

1. Vorrichtung zum axialen Fixieren von einem oder mehreren Maschinenteilen (2) auf einer Welle (1) oder Achse mit Hilfe einer ersten Hülse (3) mit einem Gewinde (34) und einer zweiten Hülse (4) mit einem Gewinde (43) zum verschrauben der beiden Hülsen (3, 4) miteinander, sowie mit wenigstens einem Anschlag (5, 6) gegen den die Hülsen (3, 4) und das Maschinenteil (2) auf der Welle (1) oder Achse in einer Richtung axial einstellbar verspannt werden, dadurch gekennzeichnet, dass der Anschlag ein Spannring (5) in einer Nut (6) der Welle (1) ist.

2. Vorrichtung nach Anspruch 1, gekennzeichnet durch Sicherungsmittel (3443) zum Drehsichern der mit den Gewinden (34, 43) verschraubten beiden Hülsen (3, 4).

3. Vorrichtung nach Anspruch 1 oder 2, dadurch gekennzeichnet, dass der Spannring (5) ein Titanring ist.

4. Vorrichtung nach einem der Ansprüche 1 bis 3, gekennzeichnet durch Dichtungen (40', 41', 40'', 41'') zwischen den Hülsen (3, 4) und/oder mindestens einer Hülse (3, 4) und der Welle (1) oder Achse.

5. Verwendung mindestens einer Vorrichtung nach einem der Ansprüche 1 bis 4 zum axialen Fixieren eines Pumpenschaufelrades (2) auf der Welle (1).

6. Verwendung von Vorrichtungen nach einem der Ansprüche 1 bis 4 und Anspruch 5, auf, in axialer Richtung beiden Seiten des Pumpenschaufelrades (2) einer Pumpe.

## Claims

1. A device for the axial location of one or a number of parts (2) of a machine on a shaft (1) or axle by means of a first sleeve (3) having a thread (34) and a second sleeve (4) having a thread (43) for screwing the two sleeves (3, 4) together, as well as having at least one stop (5, 6) against which the sleeves (3, 4) and the part (2) of the machine are clamped on the shaft (1) or axle so as to be axially adjustable in one direction, characterized in that the stop is a clamping-ring (5) in a groove (6) in the shaft (1).

2. A device as in Claim 1, characterized by securing-means (3443) for securing the two sleeves (3, 4) against turning after they have been screwed together by the threads (34, 43).

3. A device as in Claim 1 or 2, characterized in that the clamping-ring (5) is a titanium ring.

4. A device as in one of the Claims 1 to 3, characterized by seals (40', 41', 40'', 41'') between the sleeves (3, 4) and/or at least one sleeve (3, 4) and the shaft (1) or axle.

5. Use of at least one device as in one of the Claims 1 to 4 for the axial location of a pump impeller (2) on the shaft (1).

6. Use of devices as in one of the Claims 1 to 4 and Claim 5 on both sides in the axial direction, of the impeller (2) of a pump.

## Revendications

1. Dispositif de fixation axiale d'un ou de plusieurs éléments de machine (2) sur un arbre (1) ou un axe à l'aide d'un premier manchon (3) comprenant un taraudage (34) et d'un second manchon (4) comportant un filetage (43) pour le vissage des deux manchons (3, 4) l'un sur l'autre, dispositif comprenant également au moins une butée (5, 6) contre laquelle les manchons (3, 4) et l'élément de machine (2) sont bloqués dans un sens axialement de manière réglable sur l'arbre (1) ou l'axe, caractérisé en ce que la butée est une bague de serrage (5) placée dans une gorge (6) de l'arbre (1).

2. Dispositif selon la revendication 1, caractérisé par un organe d'arrêt (3443) solidarisant en rotation les deux manchons (3, 4) vissés l'un sur l'autre par les filets (34, 43).

3. Dispositif selon la revendication 1 ou 2, caractérisé en ce que la bague de serrage (5) est une bague de titane.

4. Dispositif selon l'une des revendications 1 à 3, caractérisé par des garnitures d'étanchéité (40', 41', 40'', 41'') entre les manchons (3, 4) et/ou au moins un manchon (3, 4) et l'arbre (1) ou l'axe.

5. Utilisation d'au moins un dispositif selon l'une des revendications 1 à 4 pour la fixation axiale d'une roue à ailettes (2) d'une pompe sur l'arbre (1).

6. Utilisation de dispositifs selon l'une des revendications 1 à 4 et selon la revendication 5 sur les deux côtés, en direction axiale, d'une roue à ailettes (2) de pompe.
